(19) Europäisches Patentamt
European Patent Office
Office européen des brevets

(11) Veröffentlichungsnummer: 0 000 776
A1

(12) # EUROPÄISCHE PATENTANMELDUNG

(21) Anmeldenummer: 78100588.9

(22) Anmeldetag: 03.08.78

(51) Int. Cl.$^2$: C 09 J 3/00, D 06 M 17/00
C 08 L 10/100

(30) Priorität: 11.08.77 DE 2736147

(43) Veröffentlichungstag der Anmeldung: 21.02.79 Patentblatt 79/4

(84) Benannte Vertragsstaaten: BE CH DE FR GB NL SE

(71) Anmelder: HOECHST AKTIENGESELLSCHAFT
KALLE, Patentabteilung Postfach 3540
D-6200 Wiesbaden 1(DE)

(72) Erfinder: Schermann, Walter, Dr.
Blumenthalstrasse 20
D-6200 Wiesbaden 1(DE)

(72) Erfinder: Holst, Arno, Dr.
Am Hohen Stein 32
D-6200 Wiesbaden 1(DE)

(72) Erfinder: Fischer, Wilhelm, Dr.
Hans-Sachs-Strasse 2
D-6780 Pirmasens(DE)

(54) **Wasserdampfaufnahmefähiger und wasserdampfdurchlässiger Klebstoff, ein Verfahren zu seiner Herstellung und seine Verwendung.**

(57) Die Erfindung betrifft einen in der Wasserdampfaufnahmefähigkeit und -durchlässigkeit verbesserten Klebstoff auf der Basis mindestens eines organischen, wasserunlöslichen Bindemittels und gegebenenfalls eines organischen Lösemittels und/oder Wasser. Diese Klebstoffe enthalten einen Zusatz aus mindestens einem kleinteiligen, hydrophilen, quellfähigen, modifizierten Polymeren. Diese quellfähigen, modifizierten Polymeren sind insbesodnere zu mindestens etwa 50 Gew.-% wasserunlöslich; zu ihnen zählen bevorzugt quellfähige, modifizierte Kohlenhydratderivate, wie mit Hilfe von Wärmeenergie, Strahlung oder durch eine zusätzliche chemische Verbindung vernetzte Stärkoder Celluloseether.

Bei einem Verfahren zur Herstellung solcher Klebstoffe werden der Klebstoffgrundmasse die Teilchen aus mindestens einem quellfähigen, modifizierten Polymeren vor deren Verarbeitung zugesetzt und darin gleichmäßig verteilt, und das Gemisch wird dann verstrichen oder anderweitig verformt.

Die erfindungsgemäßen Klebstoffe sind insbesondere zur Verklebung von flächigen Materialien bei der Herstellung und Verarbeitung von beschichteten Textilien und natürlichen und synthetischen Ledern geeignet.

EP 0 000 776 A1

HOECHST AKTIENGESELLSCHAFT
KALLE Niederlassung der Hoechst AG



# Wasserdampfaufnahmefähiger und wasserdampfdurchlässiger Klebstoff, ein Verfahren zu seiner Herstellung und seine Verwendung

Die Erfindung betrifft einen in der Wasserdampfaufnahmefähigkeit und -durchlässigkeit verbesserten Klebstoff mit einem Zusatz aus einem hydrophilen Polymeren, ein Verfahren zu seiner Herstellung und seine Verwendung.

Beim Aufbringen eines Klebstoffes auf ein Substrat und dem anschließenden Verkleben mit einem zweiten gleichartigen oder davon verschiedenen Substrat tritt in den meisten Fällen zwischen den beiden Substraten eine wasserdampfundurchlässige Sperre, verursacht durch den Klebstoff-Film, auf. Insbesondere beim Herstellen und Verarbeiten von beschichteten Textilien (z. B. für Allwetterkleidung oder Zeltplanen) und natürlichen und synthetischen Ledern (z. B. für Schuhobermaterial, Schuhfutter, Polsterbezüge und Oberbekleidung) ist aber eine der entscheidenden Forderungen an das Material, daß es wasserdampfaufnahmefähig und -durchlässig ist, um beispielsweise auf dem Körper eine gute Tragebequemlichkeit und ein gutes Trageklima zu erzeugen. Der notwendige Einsatz von Klebstoffen beim Herstellen und Verarbeiten dieser Materialien führt damit zwangsläufig auch zu gewissen Nachteilen bezüglich der genannten Eigenschaften. Es hat deshalb nicht an Versuchen gefehlt, diesen Nachteil zu beseitigen.

Es sind im wesentlichen vier Verfahren bekannt geworden, mit deren Hilfe es gelingen soll, die geforderten Eigenschaften zu erzielen:

1. Perforierung der Klebstoffschicht durch Einbringen winziger Löcher in die Schicht. Die Durchlässigkeit der Klebstoffschicht für Wasserdampf ist dann jedoch auf die perforierten Teile der Schicht beschränkt und die übrigen Teile der Schicht bleiben undurchlässig, außerdem beeinflußt dieses Verfahren die Aufnahmefähigkeit der Schicht für Wasserdampf nicht oder nur in geringem Maß.

2. Aufbringen des Klebstoffes auf ein Substrat in der Art, daß dieser das Substrat nur unvollständig, z. B. in einzelnen Flecken, Strichen oder Punkten, bedeckt. Dieses Verfahren beeinflußt aber die Klebefestigkeit zwischen zwei Substraten in großem Maße, so daß der Einsatz dieses Verfahrens auf wenige Spezialgebiete beschränkt bleibt. Außerdem verbleiben die weiter oben geschilderten Nachteile an den mit Klebstoff bedeckten Stellen.

3. Bei der Anwendung lösemittelhaltiger Klebstoffe kann das Lösemittel so aus der Klebstoffschicht entfernt werden, daß diese mit einer gewissen Porosität zurückbleibt. Dieses Verfahren liefert zwar in gewissem Umfang wasserdampfdurchlässige Klebeschichten, es verläuft jedoch nur bei exakter Verfahrensführung in befriedigender Weise und ergibt oftmals unregelmäßig aufgebaute Schichten, so daß die Klebefestigkeit zwischen zwei Substraten ungleichförmig sein kann. Außerdem ist die Wasserdampfaufnahmefähigkeit auch dieser Schichten sehr beschränkt.

4. Dem Klebstoff wird ein hydrophiles Polymeres beigemischt, das die geforderten Eigenschaften im Klebstoff bewirken soll. Dieses Verfahren ist aber auf bestimmte Klebstofftypen beschränkt und liefert zwar brauchbare Werte in der Wasserdampfdurchlässigkeit, nicht jedoch in der Wasserdampfaufnahmefähigkeit.

In der DT-PS 1 006 558 wird ein Klebstoff aus einem Butadienmischpolymerisat (Butadien-Methyl-isopropenylketon-Mischpolymerisat) und einem Cellulosederivat beschrieben. Als geeignete Cellulosederivate sind Celluloseester, wie Cellulosenitrat oder -acetat, und Celluloseäther, wie Benzylcellulose, genannt. Die Menge der genannten, üblicherweise filmbildenden Cellulosederivate soll 25 bis 75 Gew.-% des Mischpolymerisats betragen, die derart erzeugten Klebstoffe sollen eine große Bindekraft aufweisen.

Bei dem Verfahren zur Herstellung von Klebstoffen auf Basis von wasserlöslichen, hochpolymeren, Hydroxylgruppen enthaltenden Substanzen gemäß der DT-AS 10 75 773 wird diese Substanz in feinverteilter Form mit einem vernetzenden Aldehyd oder Keton umgesetzt, bis sie in Wasser unlöslich wird oder sich in Wasser langsamer löst, jedoch mit Wasser noch quellbar ist, und anschließend wird ein kleinerer Teil der so behandelten Substanz mit einem größeren Teil des Klebstoffes auf der Basis von wasserlöslichen Cellulosederivaten vermischt. Für dieses Verfahren sollen Cellulosederivate, insbesondere Celluloseäther, modifizierte Stärke, Pflanzengummi oder Polyvinyl-

HOECHST AKTIENGESELLSCHAFT
KALLE Niederlassung der Hoechst AG



alkohol geeignet sein. Als anwendungstechnisch günstige Eigenschaften werden die Verbesserungen in der Streichfähigkeit und der Gleiteigenschaften genannt.

Aus der DT-OS 18 09 124 ist eine Klebemasse bekannt, die ein wasserlösliches oder wasserquellfähiges Hydrokolloid oder eine Mischung solcher Hydrokolloide und ein wasserunlösliches, viskoses, natürliches oder synthetisches, kautschukartiges Bindemittel enthält. Als geeignete Hydrokolloide sind Polyvinylalkohol, Pektin, Gummi arabicum, Gelatine, Alginate, Carboxymethylcellulose, Polyäthylenglykole, Carboxypolymethylene und Polyoxyäthylene aufgeführt. Die Klebemasse soll sofort auf den verschiedenartigsten nassen Flächen haften und ihre Klebeigenschaften auch nicht verlieren, wenn mit der Klebmasse behaftete trockene Flächen feucht werden.

In der DT-AS 23 64 125 wird ein druckempfindliches Klebstoffgemisch beschrieben, das aus 90 bis 99 Gew.-Teilen eines klebrigen Copolymerisats aus einem Alkylacrylat, dessen Alkylgruppe 1 bis 14 Kohlenstoffatome enthält, wobei die durchschnittliche Anzahl der Kohlenstoffatome 4 bis 12 beträgt, mit einem eine Doppelbindung aufweisenden und damit copolymerisierbaren Monomeren und 10 bis 1 Gew.-Teilen einer Hydroxyäthylcellulose besteht. Als Anwendungsgebiet wird die Verwendung dieses Klebstoffgemisches als gas- und feuchtigkeitsdurchlässige Klebstoffschicht auf einem gas- und feuchtigkeitsdurchlässigen Substrat zur Herstellung von druckempfindlichen, atmungsfähigen Klebebändern oder klebenden blattförmigen Materialien genannt.

H O E C H S T   A K T I E N G E S E L L S C H A F T
KALLE Niederlassung der Hoechst AG



Der Erfindung liegt die Aufgabe zugrunde, einen gegenüber dem Stand der Technik verbesserten wasserdampfaufnahmefähigen und -durchlässigen Klebstoff vorzuschlagen, der die verschiedenartigsten Bindemittel in unterschiedlichen Klebstoffsystemen enthalten kann.

Die Erfindung geht aus von einem wasserdampfaufnahmefähigen und -durchlässigen Klebstoff, enthaltend mindestens ein organisches, wasserunlösliches Bindemittel, einen Zusatz aus mindestens einem hydrophilen Polymeren und gegebenenfalls ein organisches Lösemittel und/oder Wasser. Der erfindungsgemäße Klebstoff ist dadurch gekennzeichnet, daß das hydrophile Polymere ein kleinteiliges, quellfähiges, modifiziertes Polymeres ist. Unter quellfähigen Polymeren sind solche zu verstehen, die in wäßrigen Flüssigkeiten, insbesondere mit mehr als 50 Gew.-% Wassergehalt, oder durch anderweitig mit ihnen in Kontakt tretende Wassermoleküle (z. B. Wasserdampf) verursacht, quellen. Das Polymere ist insbesondere zu mindestens etwa 50 Gew.-% wasserunlöslich.

In einer bevorzugten Ausführungsform enthält der Klebstoff etwa 5 bis 30 Gew.-% an diesen Polymeren, bezogen auf die gesamte trockene Klebermasse.

Als kleinteilige, d. h. insbesondere pulverförmige oder fasrige quellfähige, modifizierte Polymere in einer Größe von $\leq$ 250 µm, bevorzugt von $\leq$ 150 µm, sind im erfindungsgemäßen Klebstoff beispielsweise die folgenden geeignet:

Vernetztes Polyalkylenoxid nach der DT-OS 20 48 721; beim Verfahren zur Herstellung dieses Produkts werden wasserlösliche Polyalkylenoxide mit einer genügend starken ionisierenden Strahlung behandelt, um eine Vernetzung und ein Unlöslichwerden des Polymeren zu erreichen. Die

Bestrahlung kann dabei mit dem Polyalkylenoxid in festem Zustand oder in Lösung erfolgen.

Das absorbierende, vernetzte, carboxylgruppenhaltige Mischpolymerisat nach der DT-OS 25 07 011 aus einer α, β-ungesättigten Säure und einem Acetal der allgemeinen Formel

$$(CH_2 = CH-CH_2-O)_2 - CH - (CH_2)_n - CH - (O-CH_2-CH = CH_2)_2$$

wobei n = 0, 1 oder 2 ist. Als α, β-ungesättigte Säure sind dabei insbesondere Acrylsäure, Methacrylsäure, Itaconsäure, α-Phenylacrylsäure oder α-Benzylacrylsäure geeignet; bei der Herstellung des Mischpolymerisats werden zweckmäßig auf 85 % bis 99,9 % einer der ungesättigten Säuren 0,1 % bis 15 % des Acetals verwendet.

Ein hydrokolloides Polymeres nach der US-PS 3.670.731 (= DT-OS 16 42 072), das durch Vernetzung wasserunlöslich gemacht wurde und dazu geeignet ist, Flüssigkeiten aufzunehmen und auch zurückzuhalten; genannt sind insbesondere bestimmte Polyacrylamide, Alkalimetallsalze von hydrolysierten Polyacrylamiden und Alkalimetallsalze von Polystyrolsulfonaten.

Ein in Wasser quellbares, vernetzes, unlösliches, physiologisch unschädliches Polymerisat nach der US-PS 3.669.103 (= DT-OS 16 17 998) aus der Gruppe der Poly-N-vinylpyrrolidone, Polyacrylamide, Polyacrylsäure und Polyglykole.

HOECHST AKTIENGESELLSCHAFT
KALLE Niederlassung der Hoechst AG



Nach dem Verfahren der DT-OS 25 41 035 hergestellte mindestens zum größten Teil wasserunlösliche, mit Wasser quellbare saugfähige Polymere, die derart hergestellt werden, daß man in homogener Phase Polyhydroxymethylen in wäßrig-alkalischer Lösung mit einer α-Halogencarbonsäure veräthert und vor, während oder nach dem Veräthern mit einem gegenüber Polyhydroxymethylen in alkalischem Medium polyfunktionellen Vernetzungsmittel umsetzt.

Insbesondere sind die folgenden quellfähigen, modifizierten Kohlenhydratderivate im Rahmen der Erfindung verwendbar: Alkalimetallsalze der Carboxymethylcellulose, die wärmebehandelt werden und in Wasser quellfähig sind nach der US-PS 2.639.239; beim Verfahren zur Herstellung dieses Produkts wird die Löslichkeit eines wasserlöslichen Alkalimetallsalzes der Carboxymethylcellulose, die einen D.S. (= Substitutionsgrad, d. h. Anzahl der substituierten Hydroxylgruppen an einer Anhydro-D-glucose-Einheit) von 0,5 bis etwa 1 aufweist, dadurch reduziert, daß man dieses trockene Salz in feinverteilter Form einer Temperatur von etwa 130° bis etwa 210° C aussetzt, wobei hochquellbare Gelteilchen erhalten werden.

Wasserunlösliche, Flüssigkeiten aufsaugende und zurückhaltende, wärmebehandelte Carboxyalkylcellulosen nach der US-PS 3.723.413 (= DT-OS 2 314 689); bei dem Verfahren zur Herstellung dieser Produkte geht man so vor, daß man

a) Cellulosematerialien mit carboxyalkylierenden Reaktionsteilnehmern behandelt und hierdurch

wasserlösliche Carboxyalkylcellulose mit einem mittleren Substitutionsgrad von mehr als 0,35 Carboxyalkylresten pro Anhydroglucoseeinheit in der Cellulose, aber mit schlechten Eigenschaften in Bezug auf Aufsaugung und Zurückhaltung von Flüssigkeiten bildet,

b) einen solchen Teil der carboxyalkylierenden Reaktionsteilnehmer und während der Reaktion gebildeten Nebenprodukte entfernt, daß, bezogen auf das Gewicht der wasserlöslichen Carboxyalkylcellulose, wenigstens etwa 3 Gew.-% davon zurückbleiben, und

c) die Carboxyalkylcellulose in Gegenwart der verbliebenen carboxyalkylierenden Reaktionsteilnehmer und Nebenprodukte der Reaktion einer Wärmebehandlung unterwirft und sie hierdurch wasserunlöslich macht und ihr ausgezeichnete Eigenschaften in Bezug auf Aufsaugung und Zurückhaltung von Flüssigkeiten verleiht.

Saugfähige Carboxymethylcellulosefasern, die zur Verwendung in Fasermaterialien für die Absorption und Retention wäßriger Lösungen geeignet und im wesentlichen wasserunlöslich sind nach der US-PS 3.589.364 (= DT-OS 1 912 740); derartige Fasern bestehen aus naßvernetzten Fasern von wasserlöslichen Salzen der Carboxymethylcellulose mit einem D.S. von etwa 0,4 bis 1,6 und weisen die ursprüngliche Faserstruktur auf. Als Vernetzungsmittel werden bevorzugt etwa 3 - 10 Gew.-% Epichlorhydrin eingesetzt.

Chemisch vernetzte, quellfähige Celluloseäther nach der US-PS 3.936.441 (= DT-OS 2 357 079); diese vernetzten Celluloseäther, insbesondere aus Carboxymethylcellulose, Carboxymethyl-hydroxyäthylcellulose, Hydroxyäthylcellulose oder Methyl-hydroxyäthylcellulose werden so hergestellt, daß die an sich wasserlöslichen Äther in alkalischem Reaktionsmedium mit einem Vernetzungsmittel umgesetzt werden, dessen funktionelle Gruppen

die Acrylamidogruppe $CH_2=CH-\underset{\overset{\|}{|\bar{O}|}}{C}-\overline{N}-$

die Chlor-azomethingruppe $-\overline{N}=\underset{|\underline{Cl}|}{\overset{}{C}}-$ oder

die Allyloxy-azomethingruppe $-\overline{N}=\underset{|}{C}-\overline{\underline{O}}-CH_2-CH=CH_2$

sind oder das Dichloressigsäure oder Phosphoroxychlorid ist.

Chemisch modifizierte, quellfähige Celluloseäther nach der US-PS 3 965 091 (= DT-OS 2 358 150); diese nicht durch Vernetzung modifizierten Celluloseäther werden so hergestellt, daß die an sich wasserlöslichen Äther in alkalischem Reaktionsmedium mit einer monofunktionell reagierenden Verbindung umgesetzt werden, die durch eine der beiden folgenden allgemeinen Formeln beschrieben wird:

$$\text{I} \qquad CH_2 = CH - CO - NH - \underset{R_2}{\underset{|}{CH}} - R_1 \qquad \text{oder}$$

H O E C H S T   A K T I E N G E S E L L S C H A F T
KALLE Niederlassung der Hoechst AG



II $CH_2 = CH - SO_2 - NH_2$ ,

wobei in Formel I: $R_1$ = die Hydroxyl-, eine Acylamino-oder eine veresterte Carbaminogruppe und $R_2$ = Wasserstoff oder die Carboxylgruppe bedeuten.

Chemisch vernetzte, quellfähige Celluloseäther nach der DT-OS 2 519 927; diese vernetzten Celluloseäther werden so hergestellt, daß die an sich wasserlöslichen Äther in alkalischem Reaktionsmedium mit Bisacrylamidoessigsäure als Vernetzer umgesetzt werden.

Frei fließende, durch Strahlung vernetzte, in Wasser quellbare hydrophile Kohlenhydrate nach der DT-AS 2 264 027; diese Produkte werden so hergestellt, daß man (mit den folgenden Reaktionsstufen können auch bei bestimmten anderen Polymeren, wie Polyäthylenoxid oder Polyvinylalkohol, gleichartige Produkte erhalten werden):

a) mindestens ein wasserlösliches pulvriges polymeres Kohlenhydrat mit einer solchen Menge mindestens eines pulvrigen inerten Füllmittels, dessen Teilchen kleiner als die des Kohlenhydrates sind, so vermischt, daß ein wesentlicher Teil der Oberfläche des pulvrigen Kohlenhydrats bedeckt ist,

b) unter Fortsetzen des Mischens das Gemisch unter gründlichem Rühren mit einem feinverteilten Wasserspray in einer solchen Menge in Berührung bringt, bei

der das Gemisch in einer frei fließenden Teilchenform erhalten bleibt, und

c) dann das erhaltene Gemisch bis zur Vernetzung des polymeren Kohlenhydrats einer ionisierenden Strahlung aussetzt.

Chemisch vernetzte oder anderweitig modifizierte, quellfähige Stärkeäther nach der DT-Anm. P 26 34 539.1; diese speziellen Stärkeäther werden so hergestellt, daß z. B. als Modifizierung eine Vernetzung mit einem Vernetzungsmittel durchgeführt wird, das folgende gegenüber Hydroxylgruppen reaktionsfähige funktionelle Gruppe trägt:

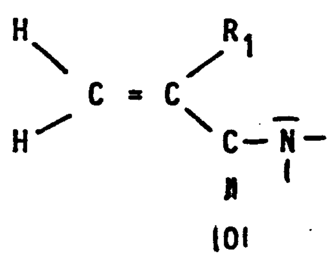

die Acrylamidogruppe, wobei $R_1$ = H oder $CH_3$ ist,

oder

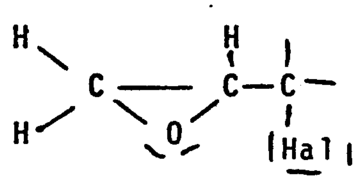

eine α-Halogen-epoxygruppe, wobei Hal = Cl oder Br ist

oder

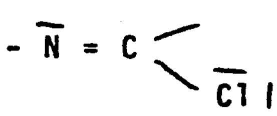

die Chlor-azomethingruppe

oder

$- \bar{N} = C - \bar{O} - CH_2 - CH = CH_2$ die Allyloxy-azomethingruppe

oder das Phosphoroxychlorid ist. Eine andere Art der Herstellung verläuft derart, daß die Modifizierung mit einer unter den genannten Bedingungen gegenüber den Hydroxylgruppen der Stärke oder des Stärkeäthers monofunktionell reaktionsfähigen Verbindung durchgeführt wird, die durch eine der folgenden allgemeinen Formeln beschrieben wird:

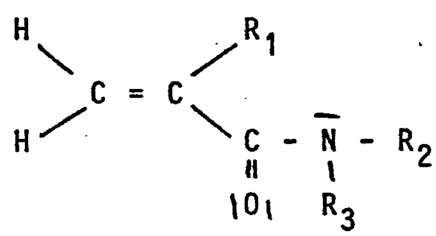

oder

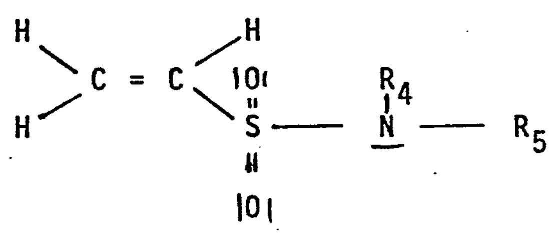

wobei $R_1 = CH_3$ oder H und $R_2$ = H und $R_3 = CH_3$, $CH_2$-OH, eine N-Methylen-acylamidogruppe mit 1 bis 3 C-Atomen,

eine veresterte N-Methylen-carbamido- oder N-Carboxymethylen-carbamidogruppe mit 2 bis 7 C-Atomen ist, oder $R_2$ und $R_3$ = $CH_3$ oder $CH_2$-OH sind und wobei $R_4$ und $R_5$ = H oder $R_4$ = H und $R_5$ = $CH_3$ oder $R_4$ und $R_5$ = $CH_3$ sind.

Alkalimetallsalze von Carboxymethylcellulose mit erhöhter Absorptions- und Retentionsfähigkeit nach der US-PS 3.678.031 (= DT-OS 21 51 973). Dabei werden zwar carboxylgruppenhaltige Verätherungsmittel eingesetzt, die einen normalerweise löslichen Celluloseäther zur Folge hätten, jedoch die Bedingungen der Reaktion so gewählt, daß Alkalimetallsalze von Carboxymethylcellulose mit einem D. S. von 0,4 - 1,2, einem wasserlöslichen Anteil von $\leq$ 35 %, einem Wasserretentionswert (WRV) von etwa 1.000 bis 7.000 und einem Salzwasserretentionswert von etwa 400 bis etwa 2.500 entstehen.

Wasserunlösliche Carboxymethylcellulosen wie sie in den DT-PS 10 79 796 und DT-AS 11 51 474 verwendet werden, d. h. solche eines D. S. von 0,05 bis 0,3 und solche die im wesentlichen wasserunlöslich sind und ebenfalls einen niedrigen D. S. aufweisen.

Wasserunlösliche, höher polymerisierte Carboxymethyl- oder Carboxyäthylcellulose mit einem wesentlichen Gehalt an freien Carboxylgruppen nach der GB-PS 725 887 (= DT-PS 10 37 076) die durch Erhitzen der wasserlöslichen, sauren Verbindungen auf 80° C bis 177° C wasserunlöslich gemacht werden.

H O E C H S T   A K T I E N G E S E L L S C H A F T
KALLE Niederlassung der Hoechst AG



Phosphorylierte Cellulosefasern nach der DT-OS 24 47 282, wie sie durch Umsetzung von Cellulose-Pulpe mit Harnstoff und Phosphorsäure unter Wärmeeinwirkung, einer anschließenden sauren Hydrolyse und einer abschließenden Oberführung in die Salzform erzeugt werden können.

Trockene, feste, mit Wasser quellbare, wasserunlösliche Absorptionsmittel nach der DT-OS 26 09 144, die aus einem ionischen Komplex von einem wasserunlöslichen anionischen Polyelektrolyten und einem Kation eines mindestens 3-wertigen Metalls bestehen; als Polyelektrolyte sind Polyacrylsäure, Stärke- oder Cellulosederivate geeignet.

Cellulosepfropfpolymerisate nach der DT-OS 25 16 380, die dadurch hergestellt werden, daß der Cellulose Seitenketten aus solchen Polymerisatresten aufgepfropft werden, die aus den ionischen und nichtionischen Polymerisatresten ausgewählt sind. Geeignet dazu sind beispielsweise: Polyacrylsäure, Natriumpolyacrylat, Polymethacrylsäure, Kaliumpolymethacrylat, Polyvinylalkoholsulfat, Polyphosphorsäure, Polyvinylamin, Poly-(4-vinylpyridin), hydrolysiertes Polyacrylnitril, Polymethylmethacrylat, Polyvinylacetat, Polystyrol oder Polybutadien.

Granulierte, wasserunlösliche Alkalimetall-Carboxylat-Salze von Stärke-Acrylnitril-Pfropf-Copolymeren nach der US-PS 3.661.815, die durch Verseifung von Stärke-Acrylnitril-Pfropf-Copolymeren mit einer Base in einem wäßrig-alkalischen Medium hergestellt werden.

Modifiziertes Cellulosematerial mit verbessertem Rückhaltevermögen für sowohl Wasser als auch physiologische Flüssigkeiten nach der DT-OS 25 28 555, das durch Anpfropfen eines olefinisch ungesättigten, polymerisierbaren Monomeren mit hydrolysierbaren funktionellen Gruppen oder eines funktionelle Carboxylgruppen tragenden Monomeren auf ein faserförmiges Cellulosematerial und Hydrolysieren oder anderweitiges Behandeln des gepfropften Produktes mit Alkali hergestellt wird. Dabei wird das Produkt zunächst in den Zustand maximaler Quellung überführt, dann auf einen pH-Wert angesäuert, bei dem es den Zustand minimaler Quellung besitzt, anschließend unter keine Quellung bewirkenden Bedingungen in die Salzform überführt und abschließend getrocknet.

Modifiziertes Polysaccharid nach der DT-OS 26 47 420, hergestellt aus Polysaccharid, Acrylamid, einem anderen Vinylmonomeren und einem Divinylmonomeren unter radikalischen Reaktionsbedingungen.

Die Klebstoffgrundmassen selbst, Verfahren zu ihrer Herstellung und verschiedenste Klebemethoden sind bekannt. Zu den Klebstoffen im Rahmen dieser Erfindung zählen insbesondere:

- Lösemittelklebstoffe, sie enthalten den Grundstoff gelöst in organischen Lösemitteln; sie binden physikalisch durch Verdunsten der in ihnen enthaltenen Lösemittel ab,

H O E C H S T   A K T I E N G E S E L L S C H A F T
KALLE Niederlassung der Hoechst AG



- Dispersionsklebstoffe, sie enthalten den Grundstoff dispergiert in Wasser und/oder einer anderen zusammenhängenden flüssigen Phase; sie binden physikalisch durch Verdunsten des Wassers und/oder der anderen Phase ab,

- Zweikomponentenklebstoffe, sie bestehen aus zwei Klebstoffkomponenten, die, unmittelbar vor Gebrauch gemischt, auf die Klebflächen aufgetragen werden; eine der beiden Klebstoffkomponenten kann z. B. ein Kunststoff- oder Kautschuk-Klebstoff, die andere der "Härter" oder "Vernetzer" z. B. ein Polyisocyanat sein; beide Komponenten gehen nach ihrem Mischen eine chemische Umsetzung z. B. eine Vernetzung ein,

- Schmelzklebstoffe, sie sind nichthärtende, schmelzbare Harze und enthalten in der Regel kein Lösemittel; der Klebfilm wird durch Schmelzen und Erstarren erhalten.

Die Grundstoffe für die erfindungsgemäßen Klebstoffe sind organische, wasserunlösliche Bindemittel, insbesondere auf der Basis von natürlichem oder synthetischem Kautschuk oder einem halbsynthetischen oder synthetischen Polymeren. Beispielsweise zählen dazu: Celluloseester wie Nitrocellulose oder Acetylcellulose, Kautschuk in Latexform oder in fester, zerkleinerter Form, Kautschukkomponenten und Polyisocyanatkomponenten, Butadien-Styrol und -Acrylnitril-Mischpolymerisate, Polychlorbutadien (= Polychloropren),

HOECHST AKTIENGESELLSCHAFT
KALLE Niederlassung der Hoechst AG



Polyester, Polyisocyanate, Polyisocyanatkomponenten und Hydroxy-polyesterkomponenten, Polyurethane, Polyvinylchlorid, Polyisobutylen, Polyvinylacetale, Polyvinylacetat, Polyvinyläther und Polyacryl- und Polymethacrylsäureester.

Als organische Lösemittel werden beispielsweise die folgenden eingesetzt:

Alkohole wie Methanol oder Äthanol; Ketone wie Aceton, Methyl-äthylketon, Cyclohexanon oder Methyl-cyclohexanon; Ester wie Essigsäure-methylester, -äthylester, -cyclohexylester oder -methylglykolester; Kohlenwasserstoffe wie Benzine, Benzol oder Toluol; Chlorkohlenwasserstoffe wie Methylenchlorid, Tetrachlorkohlenstoff, Di- oder Trichloräthan; Tetrahydrofuran oder Schwefelkohlenstoff einzeln oder im Gemisch von zwei oder mehreren von ihnen.

Die Klebstoffe können u. a. auch Weichmacher, Mittel zur Steigerung des Klebevermögens, Reaktionsbeschleuniger oder -verlangsamer, Verflüssiger, Füllstoffe, Streckmittel oder Farbstoffe enthalten.

Unter den Klebemethoden sind vor allem die folgenden gebräuchlich:

- Naßkleben, dabei werden die Substrate mit dem in nassem Zustand befindlichen Klebstoff zusammengefügt, d. h. eine oder beide Klebstoffschichten enthalten noch wesentliche Anteile an Löse- oder Dispergiermittel,

- Kontakt-Kleben, dabei wird der Klebstoff auf die beiden zu verklebenden Flächen von zwei Substraten aufgetragen; nach einer gewissen Zeitspanne ("Trockenzeit") bilden die aufgetragenen Klebstoffschichten, beim Berühren scheinbar trocken, innerhalb einer u. a. von Temperatur und Luftfeuchte abhängigen Zeitspanne ("offene Zeit" oder "Kontaktklebezeit") beim Zusammenlegen unter geringem Druck Klebungen sofort meßbarer Festigkeit,

- Wärmeaktivier-Kleben, dabei bildet der auf ein Substrat aufgetragene Klebstoff nach dem Trocknen klebfreie ("nichtblockende") Klebschichten, die bei ausreichendem Erwärmen klebfähig werden und sich unter Druck mit einem anderen Klebstoffgemisch oder einem zweiten Subtrat verbinden und nach dem Abkühlen eine feste, dauerhafte Klebung bilden,

- Lösungsmittelaktivier-Kleben, dabei bildet der auf ein Substrat aufgetragene Klebstoff nach dem Trocknen klebfreie ("nichtklebende") Klebstoffschichten, die durch Befeuchten mit Lösemitteln wieder klebfähig gemacht werden und sich unter Druck mit einem anderen Klebstoffaufstrich oder einem zweiten Substrat verbinden und nach dem Verdunsten des Lösemittels eine feste, dauerhafte Klebung bilden.

Zur ausführlichen Darstellung der Technologie der Klebstoffe und des Klebens wird z. B. auf Ullmanns Encyklopädie der technischen Chemie, Verlag Urban & Schwarzenberg - München,

HOECHST AKTIENGESELLSCHAFT
KALLE Niederlassung der Hoechst AG



1957, Band 9, 3. Auflage, Stichwort "Klebstoffe", Seiten 578 ff verwiesen.

Bei einigen Klebeverfahren, beispielsweise dem Aufbringen einer Klebstoff-Schicht auf ein flächenhaftes Gebilde aus Vliesstoff, ist neben der Erzielung eines KLebstoff-Films auch eine Verklebung der Vliesstoff-Teilchen untereinander mit beabsichtigt. Auch in diesen Anwendungen liefert der erfindungsgemäße Klebstoff gute Ergebnisse.

Bei der Durchführung der Beispiele wurde insbesondere mit den folgenden Klebstoffen vorgegangen (Teile sind Gew.-Teile, %-Angaben sind in Gew.-% angegeben):

1 Polychloroprenklebstoff, hergestellt aus
19,1 % Polychloropren
8,0 " Phenolharz
24,9 " Toluol
24,0 " Benzin
24,0 " Essigsäure-äthylester

2 Polyurethanklebstoff, hergestellt aus
20,0 % Polyurethan (® Desmocoll 400, Handelsname der Bayer AG, Deutschland)
40,0 " Essigsäure-äthylester
40,0 " Methyl-äthylketon

3 Kunstharz-Dispersionsklebstoff, hergestellt aus
100 Teilen 60%iger wäßriger Polyvinylacetat-Dispersion
50 " Wasser

4 Naturkautschuk-Latexklebstoff, hergestellt aus
167 Teilen 60%igem Naturlatex
10 " Phenolharz

Um die erfindungsgemäßen Klebstoffe herzustellen, werden den zu verarbeitenden Grund-Klebstoffmassen vor ihrer Verarbeitung die Teilchen aus mindestens einem quellfähigen, modifizierten Polymeren, bevorzugt in einem Anteil von 5 bis 30 Gew.-%, bezogen auf die gesamte trockene Klebemasse, zugesetzt und darin gleichmäßig verteilt; das Gemisch wird dann verstrichen oder anderweitig verformt. Unter dem Begriff "gleichmäßig verteilt" ist dabei eine statistische Verteilung zu verstehen.

Bei dem Einsatz von Wärme zur Trocknungsbeschleunigung oder zur Klebstoff-Aktivierung sollte eine bestimmte obere Temperaturgrenze möglichst nicht überschritten werden. d. h. der erfindungsgemäße Klebstoff sollte nicht länger als etwa 10 min auf etwa maximal 150° C und über einen längeren Zeitraum nicht über etwa 120° C bis 130° C erwärmt werden. Liegt der Klebstoff als wäßrige oder wasserhaltige Dispersion vor, so empfiehlt es sich, den Wassergehalt des Klebstoffs vor oder mit der Zugabe der kleinteiligen, quellfähigen, modifizierten Polymeren zu erhöhen, um den Klebstoff in einer gut-verarbeitbaren Form zu erhalten.

Die erfindungsgemäßen Klebstoffe weisen eine gute Fähigkeit zur Wasserdampfaufnahme und zur -durchlässigkeit auf, die über einen reinen Transporteffekt der eingearbeiteten Teilchen weit hinausgeht. Darüberhinaus sind die Klebstoffe

auch dazu in der Lage, den aufgenommenen Wasserdampf unter bestimmten Bedingungen, beispielsweise Aufenthalt in einem andersartigen Klima, wieder abzugeben.

Da die genannten Eigenschaften der erfindungsgemäßen Klebstoffe nicht allein auf dem signifikant nachweisbaren Effekt durch den Zusatz der Teilchen aus mindestens einem quellfähigen, modifizierten Polymeren beruhen, sondern u. a. auch von der Stärke des Klebstoff-Films bzw. Beschichtung abhängig sind, werden diese zweckmäßigerweise in einer Stärke von etwa 0,01 bis zu etwa 0,5 mm hergestellt, insbesondere dann, wenn neben einer guten Wasserdampfaufnahmefähigkeit auch eine gute Wasserdampfdurchlässigkeit erzielt werden soll.

Die erfindungsgemäßen Klebstoffe mit den genannten Eigenschaften werden bevorzugt zur Verklebung von flächigen Materialien bei der Herstellung und Verarbeitung von beschichteten Textilien und natürlichen und synthetischen Ledern verwendet, also von Materialien, die für solche Anwendungsgebiete geeignet sind, bei denen unter physiologischen Bedingungen Körperflüssigkeiten, wie z. B. Schweiß, auftreten können; dazu zählen beispielsweise Oberbekleidung (Allwetter- oder Lederkleidung), Schuhobermaterialien, Schuhfutter oder Schuh-Einlegesohlen.

Unter den in der Beschreibung und den Beispielen zur Charakterisierung der erfindungsgemäßen Klebstoffe und der in ihnen vorhandenen quellfähigen, modifizierten Polymere verwendeten Parametern ist folgendes zu verstehen:

WRV Wasserrückhaltevermögen des quellfähigen, modifizierten Polymeren in Gew.-%, gemessen gegen 2000-fache Erdbeschleunigung, bezogen auf seinen wasserunlöslichen Anteil; das WRV wird nach Eintauchen der Probe in Wasser bestimmt,

WUA wasserunlöslicher Anteil im quellfähigen modifizierten Polymeren,

DS Substitutionsgrad, Anzahl der substituierten Hydroxylgruppen an den Anhydro-D-glucose-Einheiten, von 0,0 bis 3,0,

SV Saugvermögen des quellfähigen modifizierten Polymeren für 1%ige NaCl-Lösung in Gew.-%, bezogen auf sein Gesamtgewicht; das SV wird bestimmt nach Aufsaugen von 1 %iger wäßriger NaCl-Lösung durch die Probe bis zur Sättigung,

WDD Wasserdampfdurchlässigkeit (nach W. Fischer und W. Schmidt, "Das Leder", E. Roether-Verlag, Darmstadt, 27, 87 ff (1976)). Innerhalb der Apparatur herrscht eine Temperatur von 32° C, über der Probe ein Normklima - wenn nichts anderes angegeben ist - von 23° C / 50 % relative Feuchte, das von einem über dem Gerät angebrachten Ventilator durch einen leichten Luftstrom immer konstant gehalten wird. Die freie Prüffläche beträgt 10 cm². Auch innerhalb der Apparatur wird mit Hilfe eines Magnetrührers das Wasser von 32° C und die darüber befindliche mit Wasserdampf gesättigte Atmosphäre ständig in Bewegung gehalten. Die Bestimmung der WDD

erfolgt durch die Bestimmung der Gewichtsabnahme des Prüfgefäßes mit der Probe. Die WDD wird in mg/cm² · x h (x meist 1, aber auch 8 oder 24) angegeben.

WDA Wasserdampfaufnahme (siehe auch WDD). Die Wasserdampfaufnahme wird gleichzeitig mit der WDD-Messung durchgeführt, die Bestimmung erfolgt durch Ermittlung der Gewichtszunahme der Probe; wenn nichts anderes angegeben ist, ist die Probe zum Außenklima hin durchlässig, d. h. sie wird nicht abgedeckt.

In allen folgenden Beispielen wurden als repräsentative modifizierte, quellfähige Polymere mit Bisacrylamidoessigsäure chemisch-vernetzte Natrium-carboxymethylcellulosen mit den folgenden Parametern WUA $\geq$ 70 %, WRV = 400 bis 700 %, SV = 800 bis 1.400 %, DS = 0,8 bis 1,1 und einer Teilchengröße von $\leq$ 200 $\mu$m mit einem Anteil von 90 Gew.-% von $\leq$ 100 $\mu$m verwendet.

Beispiele 1 bis 4 und Vergleichsbeispiele V 1 und V 2
(siehe Tabelle)

Es werden erfindungsgemäße Klebstoff-Filme erzeugt und auf ihre Wasserdampfdurchlässigkeit und -aufnahmefähigkeit untersucht und mit gleichartigen Klebstoff-Filmen ohne Zusatz verglichen. Die Klebstoffe sind wie folgt aufgebaut:

Bsp. V 1: Polychloropren-Klebstoff ohne Zusatz

Bsp. 1 : Polychloropren-Klebstoff mit 15 Gew.-% an Zusatz aus modifiziertem, quellfähigem Polymeren

Bsp. 2 : Polychloropren-Klebstoff mit 20 Gew.-% an Zusatz aus modifiziertem, quellfähigem Polymeren

Bsp. V 2: Polyurethan-Klebstoff ohne Zusatz

Bsp. 3 : Polyurethan-Klebstoff mit 15 Gew.-% an Zusatz aus modifiziertem, quellfähigem Polymeren

Bsp. 4 : Polyurethan-Klebstoff mit 20 Gew.-% an Zusatz aus modifiziertem, quellfähigem Polymeren

In allen Fällen ergibt der erfindungsgemäße Zusatz einen deutlichen Anstieg in den WDD- und WDA-Werten, die sich mit steigender Menge des Zusatzes noch erhöhen.

Beispiele 5 bis 10 und Vergleichsbeispiele V 3 bis V 8

Nach DIN 53 273 (im Entwurf vom März 1976) wird der Schälwiderstand L von Klebstoffen mit und ohne erfindungsgemäßen Zusatz bestimmt. Dabei ist der Schälwiderstand L die Kraft, bezogen auf die Klebfuge einer Probe, die notwendig ist, die Probe im Schälversuch zu trennen. Die jeweiligen Substratproben sind aus Gummi und/oder Leder, die Oberflächen werden gereinigt und aufgerauht und aus den Substraten werden Streifen von 150 mm x 30 mm ausgestanzt. Der Klebstoff wird bei 23° C ± 2° C so lange gelagert, bis er diese Temperatur angenommen hat und dann seinem Typ entsprechend auf das oder die Substrate

aufgetragen und verarbeitet, so daß zwei Substratstreifen deckend in einer Länge von 100 mm verklebt sind. Die ungeklebten Enden der Proben werden nach beiden Seiten umgebogen auf 20 mm Länge in die Zugprüfmaschine eingespannt. Die beiden Enden werden mit einer Vorschubgeschwindigkeit von 100 mm/min auseinandergezogen. Der Schälwiderstand L ist die Kraft, die sich als Wert bzw. Mittelwert bei mehreren Proben über den Trennweg ergibt, d. h.

$$L = \frac{\text{Wert der beim Trennen abgelesenen Kraft in N}}{\text{Probenbreite in mm}}$$

Die Klebstoffe sind wie folgt aufgebaut:

| | | |
|---|---|---|
| Bsp. V3/V4 | : | Polyurethan-Klebstoff ohne Zusatz |
| Bsp. 5/6 | : | Polyurethan-Klebstoff mit 15 Gew.-% an Zusatz aus modifiziertem, quellfähigem Polymeren |
| Bsp. V5/V6 | : | Polychloropren-Klebstoff ohne Zusatz |
| Bsp. 7/8 | : | " -" mit 15 Gew.-% an Zusatz aus modifiziertem, quellfähigem Polymeren |
| Bsp. V 7 | : | Naturkautschuk-Latexklebstoff ohne Zusatz |
| Bsp. 9 | : | " -" mit 15 Gew.-% an Zusatz aus modifiziertem, quellfähigem Polymeren |
| Bsp. V8 | : | Polyvinylacetat-Klebstoff ohne Zusatz |
| Bsp. 10 | : | " -" mit 15 Gew.-% an Zusatz aus modifiziertem, quellfähigem Polymeren |

Die genannten Klebstoffe liefern nach DIN 53 273 folgende Schälwiderstände (in N/mm) bei einer Verklebung von Testgummi/Testgummi: 9,6 (Bsp. V3), 9,5 (Bsp. 5), 8,7 (Bsp. V5) und 8,4 (Bsp. 7); bei einer Verklebung von Testgummi/Testleder: 8,7 (Bsp. V4), 8,9 (Bsp. 6), 8,3 (Bsp. V6) und 8,4 (Bsp. 8); bei einer Verklebung von Testleder/Testleder: 1,5 (Bsp. V7), 1,5 (Bsp. 9), 1,3 (Bsp. V8) und 1,4 (Bsp. 10). Die Schälwiderstände ändern sich also nicht oder nur in unwesentlichem Maße, so daß die Klebkraft der Klebstoffe durch den erfindungsgemäßen Zusatz höchstens in geringem Maße beeinflußt wird.

| Beispiel | Stärke der Probe (mm) | Größe der Probe (mm²) | WDD | | WDA | |
|---|---|---|---|---|---|---|
| | | | mg/cm² · 8h | mg/cm² · 1 h | mg/cm² · 8h | Gew.-% |
| V 1 | 0,20 - 0,25 | 10 | 0,79 | 0,10 | 0,22 | 0,60 |
| 1 | 0,30 - 0,35 | 10 | 5,86 | 0,73 | 12,91 | 12,27 |
| 2 | 0,40 | 10 | 16,47 | 2,06 | 19,91 | 40,08 |
| V 2 | 0,40 | 10 | 2,10 | 0,26 | 0,22 | 0,39 |
| 3 | 0,40 | 10 | 3,26 | 0,41 | 6,95 | 14,01 |
| 4 | 0,41 | 10 | 6,63 | 0,83 | 10,20 | 20,88 |

Beispiele 11 bis 13 und Vergleichsbeispiel V 9

Es werden Polyester-Stapelfasern (Polyethylenglykolterephthalat, 1,3 dtex, 38 mm lang) über Krempel und Kreuzleger zu einem Vlies eines Flächengewichts von etwa 150 $g/m^2$ verarbeitet und in einem Vornadelstuhl leicht mechanisch verfestigt. Das genadelte Vlies wird mit einem wäßrigen Polyurethan-haltigen Medium gebunden (Bindergehalt etwa 65 bis 70 Gew.-%, bezogen auf den Faseranteil), z. B. auf dem Foulard mit den folgenden Komponenten tauchimprägniert: wäßrige Polyurethan-Dispersion, anionischer und nichtionischer Emulgator, wäßrige $Ca(NO_3)_2$-Lösung, Lederfarbstoff und (in den Beispielen, nicht aber im Vergleichsbeispiel) einem Zusatz des modifizierten, quellfähigen Polymeren. Das Polyurethan kann dabei sowohl den Binder für das Vlies als auch eine Klebstoffschicht auf dem gebundenen Vlies darstellen. Das imprägnierte Vlies wird etwa 50 min bei etwa 110°C getrocknet.

Bsp. 11 : Zusatz von 5 Gew.-% des modifizierten, quellfähigen Polymeren, bezogen auf den Trockenanteil des Binders

Bsp. 12 : Zusatz von 10 Gew.-% des modifizierten, quellfähigen Polymeren

Bsp. 13 : Zusatz von 15 Gew.-% des modifizierten, quellfähigen Polymeren

Bsp. V 9 : ohne Zusatz des modifizierten, quellfähigen Polymeren

| Beispiel | Stärke der Probe (mm) | Größe der Probe ($mm^2$) | WDA (Gew.-%) nach 4 h | 8 h | 24 h | WDA ($mg/cm^2 \cdot 8h$) |
|---|---|---|---|---|---|---|
| V 9 | 1,05 | 50 · 100 | 3,78 | 4,23 | 4,56 | 5,99 |
| 11 | 1,10 | 50 · 100 | 4,55 | 5,41 | 6,09 | 8,16 |
| 12 | 1,10 | 50 · 100 | 5,26 | 6,21 | 7,02 | 9,03 |
| 13 | 1,15 | 50 · 100 | 5,93 | 7,48 | 9,44 | 12,62 |

H O E C H S T   A K T I E N G E S E L L S C H A F T
KALLE Niederlassung der Hoechst AG



## Patentansprüche

1. Wasserdampfaufnahmefähiger und -durchlässiger Klebstoff, enthaltend mindestens ein organisches, wasserunlösliches Bindemittel, einen Zusatz aus mindestens einem hydrophilen Polymeren und gegebenenfalls ein organisches Lösemittel und/oder Wasser, dadurch gekennzeichnet, daß das hydrophile Polymere ein kleinteiliges, quellfähiges, modifiziertes Polymeres ist.

2. Klebstoff nach Anspruch 1, dadurch gekennzeichnet, daß das quellfähige, modifizierte Polymere zu mindestens etwa 50 Gew.-% wasserunlöslich ist.

3. Klebstoff nach Anspruch 1 oder 2, dadurch gekennzeichnet, daß das quellfähige, modifizierte Polymere ein Kohlenhydratderivat ist.

4. Klebstoff nach einem der Ansprüche 1 bis 3, dadurch gekennzeichnet, daß das quellfähige, modifizierte Polymere ein Stärke- oder Celluloseäther ist.

5. Klebstoff nach einem der Ansprüche 1 bis 4, dadurch gekennzeichnet, daß das quellfähige, modifizierte Polymere ein mit Hilfe von Wärmeenergie, Strahlung oder durch eine zusätzliche chemische Verbindung vernetzter Stärke- oder Celluloseäther ist.

6. Klebstoff nach einem der Ansprüche 1 bis 5, dadurch gekennzeichnet, daß er etwa 5 bis 30 Gew.-%, bezogen auf

H O E C H S T  A K T I E N G E S E L L S C H A F T
KALLE Niederlassung der Hoechst AG



die gesamte trockene Klebermasse, an quellfähigem, modifiziertem Polymeren enthält.

7. Verfahren zur Herstellung eines wasserdampfaufnahmefähigen und -durchlässigen Klebstoffs nach Anspruch 1, dadurch gekennzeichnet, daß der Klebstoffgrundmasse die Teilchen aus mindestens einem quellfähigen, modifizierten Polymeren vor deren Verarbeitung zugesetzt und darin gleichmäßig verteilt werden und das Gemisch dann verstrichen oder anderweitig verformt wird.

8. Verfahren nach Anspruch 7, dadurch gekennzeichnet, daß die Teilchen in einem Anteil von 5 bis 30 Gew.-%, bezogen auf die gesamte trockene Klebermasse, zugesetzt werden.

9. Verwendung des Klebstoffs nach Anspruch 1 zur Verklebung von flächigen Materialien bei der Herstellung und Verarbeitung von beschichteten Textilien und natürlichen und synthetischen Ledern.

0000776

Europäisches Patentamt

**EUROPÄISCHER RECHERCHENBERICHT**

Nummer der Anmeldung

EP 78 10 0588

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - B - 1 298 876 (ASCHAFFENBURGER ZELLSTOFFWERKE)<br>* Spalte 1, Zeilen 59 bis 60; Spalte 2, Zeilen 49 bis 56; Patentanspruch *<br>-- | 1-9 | C 09 J 3/00<br>D 06 M 17/00<br>C 08 L 101/00 |
| | DE - B - 1 072 767 (WILLY HESSELMANN)<br>* Spalte 1, Zeilen 39 bis 46; Patentanspruch *<br>-- | 1 | |
| | | | RECHERCHIERTE SACHGEBIETE (Int. Cl.²) |
| P | NL - A - 77 12778 (CPC)<br>* Seite 7, Zeilen 26-27; Patentansprüche *<br>-- | 1 | D 06 M 17/00<br>C 09 J 3/04<br>C 09 J 3/12<br>C 09 J 3/14<br>C 09 J 3/00 |
| A | FR - A - 1 350 900 (BAYER)<br>* Zusammenfassung *<br>-- | 1,9 | |
| A | DE - C - 969 446 (HOECHST)<br>* Patentanspruch *<br>-- | 1 | KATEGORIE DER GENANNTEN DOKUMENTE |
| A | DE - B - 1 196 161 (GREFRATH VELOUR)<br>* Patentanspruch *<br>---- | 1,9 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| ∕ | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 13-11-1978 | LENSEN |